(19) Europäisches Patentamt / European Patent Office / Office européen des brevets

(11) **EP 1 959 278 A1**

(12) **EUROPEAN PATENT APPLICATION**

(43) Date of publication:
**20.08.2008 Bulletin 2008/34**

(51) Int Cl.:
***G02B 6/12*** (2006.01)   ***G02B 6/13*** (2006.01)
***G02B 6/125*** (2006.01)

(21) Application number: **08151507.4**

(22) Date of filing: **15.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.02.2007 JP 2007035318**

(71) Applicant: **FUJITSU LIMITED**
**Kawasaki-shi,**
**Kanagawa 211-8588 (JP)**

(72) Inventors:
• **Tanaka, Shinsuke**
  **Nakahara-ku**
  **Kawasaki-shi, Kanagawa 211-8588 (JP)**
• **Morito, Ken**
  **Nakahara-ku**
  **Kawasaki-shi, Kanagawa 211-8588 (JP)**

(74) Representative: **Fenlon, Christine Lesley**
**Haseltine Lake**
**5th Floor, Lincoln House**
**300 High Holborn**
**London WC1V 7JH (GB)**

(54) **Semiconductor integrated optical element**

(57)  Aiming at realizing a semiconductor integrated optical element comprising a single semiconductor substrate (1), and first (2) and second (3) optical waveguides differed in the equivalent refractive index from each other on the semiconductor substrate, allowing light signal to propagate from the first optical waveguide to the second optical waveguide, in which the first and second optical waveguides are provided side-by-side on the semiconductor substrate to form a directional coupler allowing optical coupling between the first and second optical waveguides, and a first-guiding-mode optical signal in the first optical waveguide is output after being converted into a second-guiding-mode optical signal in second optical waveguide, which makes possible to suppress generation of reflection loss and emission loss in optical coupling, and obtain extremely desirable optical coupling characteristics, without causing reflection of optical signal, between different types of optical waveguides differed from each other in the equivalent refractive index.

FIG. 2

EP 1 959 278 A1

**Description**

CROSS-REFERENCE TO RELATED APPLICATIONS

This application is based upon and claims the benefit of priority from the prior Japanese Patent Application No. 2007-035318, filed on February 15, 2007, the entire contents of which are incorporated herein by reference.

BACKGROUND OF THE INVENTION

[Field of the Invention]

The present invention relates to a semiconductor integrated optical element having two types of optical waveguide formed on a semiconductor substrate.

[Description of the Related Art]

To deal with a huge volume of data which keeps on increasing, further increase in volume and further advancement in functions are required for photonic network under rapid introduction. Also for semiconductor integrated optical elements, which are important constituents as light source, optical amplifier, photodetector and so forth used in the photonic network, there is a demand on downsizing and functional enhancement through integration of a plurality of elements or a plurality of functions on a single semiconductor substrate.
For example, there have been proposed semiconductor integrated optical elements having various geometries and functions, such as wide-band, variable-wavelength laser having a plurality of semiconductor lasers having different oscillation wavelength as combined with semiconductor optical amplifier, optical waveguide and optical multiplexer, and a optical gate switch array having a plurality of semiconductor optical amplifiers as combined with optical waveguide and optical multiplexer, which are under continued efforts of development.
The semiconductor integrated optical' element is configured as combining a plurality of active regions such as semiconductor laser, semiconductor optical amplifier (abbreviated as SOA, hereinafter), phase controller, photodetector and so forth, with optically passive region for allowing signal propagation, such as optical waveguide, photocoupler and so forth. In view of respectively obtaining desirable characteristics of the constituents in the elements, the individual regions in these semiconductor integrated optical elements are preferably given with waveguide design optimized for every region. As a consequence, the individual regions in the semiconductor integrated optical elements are differed from each other in the semiconductor materials used for composing the optical core layers, or in the waveguide geometries (thickness, width and so forth of the optical core layers).

[Patent Document 1] Japanese Patent Application Laid-open No. H9-197154

As has been described in the above, in the semiconductor integrated optical elements having the optical waveguide composing the active regions and the optical waveguide composing the optically passive regions, the individual optical waveguides have different equivalent refractive indexes sensed by their optical guiding modes. Optical coupling between different optical waveguides, therefore, emerges as an important issue in thus-configured semiconductor integrated optical elements.

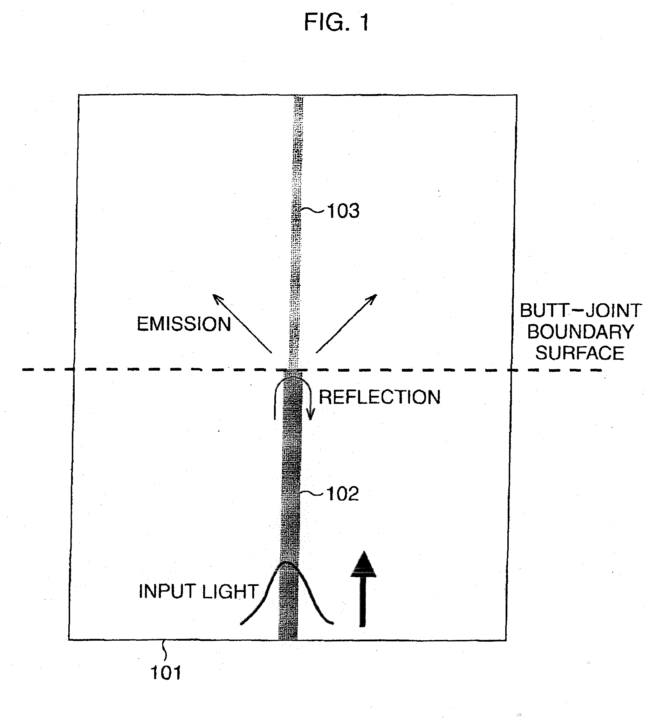

Fig. 1 shows an exemplary conventional semiconductor integrated optical element, in which optical coupling is obtained by two types of optical waveguides differed from each other in the equivalent refractive index.
The semiconductor integrated optical element is configured as having optical waveguides 102, 103, differed from each other in the equivalent refractive index, formed on a semiconductor substrate 101, wherein the optical waveguides 102, 103 are longitudinally connected in the direction of optical axes by the so-called "but-joint connection", so as to achieve optical coupling of the optical waveguides 102, 103.
The semiconductor integrated optical element, however, causes reflection or emission at the butt-joint, which is ascribable to mismatching of guiding mode of light propagating through the individual optical waveguides 102, 103 due to difference therebetween in the equivalent refractive index, disagreement in the thickness of layers and material composition at around the butt-joint, and non-uniformity in the interface. Therefore, large emission loss and reflection loss may occur, and the optical coupling efficiency between the optical waveguides may degrade.
Efficient strategies for solving this problem may be such as (1) equalizing the equivalent refractive index between both waveguides composing the butt-joint, and may be such as (2) equalizing form of the optical guiding mode of light propagating through both optical waveguides, and equalizing also the height of optical axis (height of the center axis of the light guiding mode above the semiconductor substrate). It is, however, difficult to enforce these strategies at the same time with improvement in the element characteristics through independent optimization of the individual waveguides of the semiconductor integrated optical element.

Patent Document 1 discloses a technique of abutting two types of optical waveguides, while forming the joint surface between these optical waveguides in a plane inclined away from the plane normal to the direction of optical axis, so as to allow absorption of reflected light on the joint surface by regions other than the optical waveguides. Reflection loss, however, occurs at the joint surface as a natural consequence of the structure, thereby the optical coupling efficiency inevitably degrades, and it is even impossible to make the regions other than the optical waveguides completely absorb the reflected light.

SUMMARY OF THE INVENTION

According to an aspect of an embodiment, there is a semiconductor integrated optical element having a single semiconductor substrate; and a first optical waveguide and a second optical waveguide formed on the semiconductor substrate, differed in the equivalent refractive index from each other; being configured so as to allow light signal to propagate from the first optical waveguide to the second optical waveguide, wherein the first optical waveguide and the second optical waveguide are provided side-by-side on the semiconductor substrate, a directional coupler allowing optical coupling between the first optical waveguide and the second optical waveguide is formed at a portion where the first optical waveguide and the second optical waveguide are disposed as being adjacent to each other, and a first-guiding-mode optical signal in the first optical waveguide is output after being converted into a second-guiding-mode optical signal in second optical waveguide.

BRIEF DESCRIPTION OF THE DRAWINGS

Fig. 1 is a schematic plan view showing an exemplary conventional semiconductor integrated optical element, capable of obtaining optical coupling by two optical waveguides differed from each other in the equivalent refractive index;
Fig. 2 is a schematic plan view showing principal configuration of a semiconductor integrated optical element of the present invention;
Figs. 3A to 3C are schematic sectional views sequentially showing steps of manufacturing the semiconductor integrated optical element containing the principal configuration shown in Fig. 2;
Figs. 4A to 4C are schematic sectional views continued from Fig. 3C, sequentially showing steps of manufacturing the semiconductor integrated optical element containing the principal configuration shown in Fig. 2;
Fig. 5 is a schematic plan view of the semiconductor integrated optical element corresponded to Fig. 4C;
Fig. 6 is a schematic plan view of a final form of a semiconductor integrated optical element in Modified Example 2 of a first embodiment;
Figs. 7A and 7B are schematic sectional views showing principal steps out of the individual steps of manufacturing a semiconductor integrated optical element according to a fifth embodiment; and
Fig. 8 is a schematic plan view corresponded to Fig. 7B.

DETAILED DESCRIPTION OF THE PREFERRED EMBODIMENTS

Considering the fact that, in a semiconductor integrated optical element in which optical coupling is obtained between two types of optical waveguides differed in the equivalent refractive index, a configuration allowing optical coupling between both optical waveguides through butt-joint may form a principal cause for emission loss and reflection loss, the present inventors went through extensive investigations aiming at realizing a configuration wherein the butt-joint is not involved in optical coupling between both optical waveguides, and finally reached the present invention.

In the semiconductor integrated optical element, the first optical waveguide and the second optical waveguide, differed from each other in the equivalent refractive index, are disposed side-by-side on a single semiconductor substrate, a directional coupler allowing optical coupling between these optical waveguides is formed at a portion where these optical waveguides are disposed as being adjacent to each other, and a first-guiding-mode optical signal in the first optical waveguide is output after being converted into a second-guiding-mode optical signal in second optical waveguide. In such configuration, desirable optical coupling between both optical waveguides may be realized, based on the function of converting the optical guiding mode in the directional coupler.

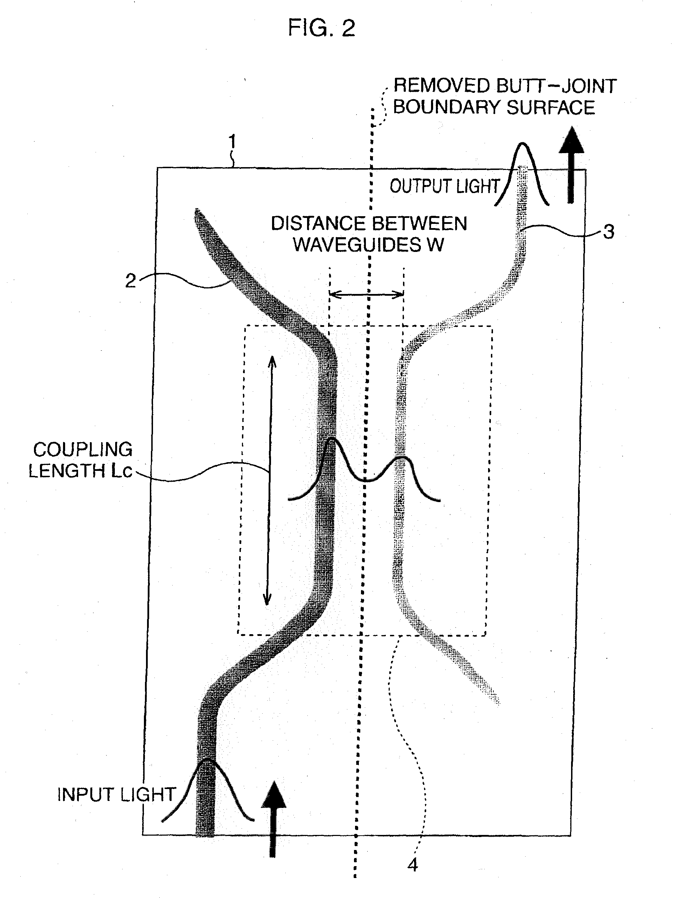

Fig. 2 is a schematic plan view showing principal configuration of a semiconductor integrated optical element.

In the semiconductor integrated optical element, a first optical waveguide 2 and a second optical waveguide 3, differed from each other in the equivalent refractive index are formed side-by-side on a single semiconductor substrate 1, and thereby a directional coupler allowing optical coupling between both optical waveguides 2, 3 is formed. An optical signal having an optical guiding mode $M_1$ propagated through the first optical waveguide 2 is almost completely converted into a signal having an optical guiding mode $M_2$, different from the first optical guiding mode $M_1$, propagatable in the second optical waveguide 3, by virtue of an action converting the optical guiding mode available in a directional coupler region 4 having therein both optical waveguides 2, 3 aligned in parallel with each other, and is then output. Fig. 2 shows a butt-joint already removed in the process of manufacturing.

In the directional coupler region 4, the length (coupling length: Lc) and the distance (W) between both optical waveguides are designed so as to maximize the coupling efficiency, depending on structures (refractive index, dimension) of the first and the second optical waveguides 2, 3. By this configuration, an optical conversion efficiency of as high as almost 100% may be realized. In a strict sense, a complete conversion efficiency of 100% will not theoretically be obtained, unless the equivalent refractive indice of both optical waveguides are equal. In contrast, the present invention may obtain an extremely large coupling efficiency, while suppressing as possible reflection loss and emission loss between the optical waveguides, even when both optical waveguide largely differ from each other in the equivalent refractive index, or in optical guiding mode.

More specifically, the directional coupler composed of the first and the second optical waveguides, having propagation coefficients $\beta^{(1)}$, $\beta^{(2)}$, has power conversion efficiency F expressed as:

$$F = 1 / [ 1 + \{ ( \beta^{(1)} - \beta^{(2)} ) / 2 | K_{12} | \}^2 ] \quad \cdot \cdot \cdot ( 1 )$$

where, $K_{12}$ is a coupling coefficient of the both, determined by a large number of structural parameters including distance W between the waveguides.

In the directional coupler, length Lc of the directional coupler realizing a maximum power conversion efficiency is given by:

$$Lc = \pi / 2 [ \{ ( \beta^{(1)} - \beta^{(2)} ) / 2 \}^2 + | K_{12} |^2 ]^{1/2} \quad \cdot \cdot \cdot ( 2 )$$

The directional coupler is fabricated by designing, based on the equation (1), the distance W between two given optical waveguides and width of the individual optical waveguides so as to maximize $K_{12}$, and by designing, based on the equation (2), the length Lc of the directional coupler so as to obtain a maximum power conversion efficiency.

In the semiconductor integrated optical element, highly efficient optical coupling may be obtained while minimizing the reflection loss and emission loss, by appropriately designing the coupling length Lc, the distance W between both optical waveguides, and the width of the individual waveguides, even under a situation where the first and second optical waveguide are considerably differed from each other in the equivalent refractive index, material composing the core layer, and geometry of the waveguides.

In addition, the semiconductor integrated optical element may fundamentally solve a conventionally lasting problem of reflection and emission phenomena, ascribable to disagreement in the thickness of layers and material composition of the both at around the butt-joint, and non-uniformity in the interface.

Moreover, the semiconductor integrated optical element is almost insusceptible to difference in the level of height between both optical waveguides, so that highly efficient optical coupling may readily be realized even between the waveguides differed from each other in the level of height of the optical axis.

Paragraphs below will describe specific embodiments applied with the present invention, referring to the attached drawings.

(First Embodiment)

In this embodiment, a specific example of a method of manufacturing the semiconductor integrated optical element containing the principal configuration shown in Fig. 2 will be explained. An example shown herein relates to a semiconductor integrated optical element having an SOA optical waveguide composing the active region as the first optical waveguide 2, and an optical waveguide composing the optically passive region as the second optical waveguide 3, integrated on a single semiconductor substrate. In this embodiment, the first optical waveguide 2 will be denoted as an SOA optical waveguide 10, and the second optical waveguide 3 will be denoted as an optical waveguide 20.

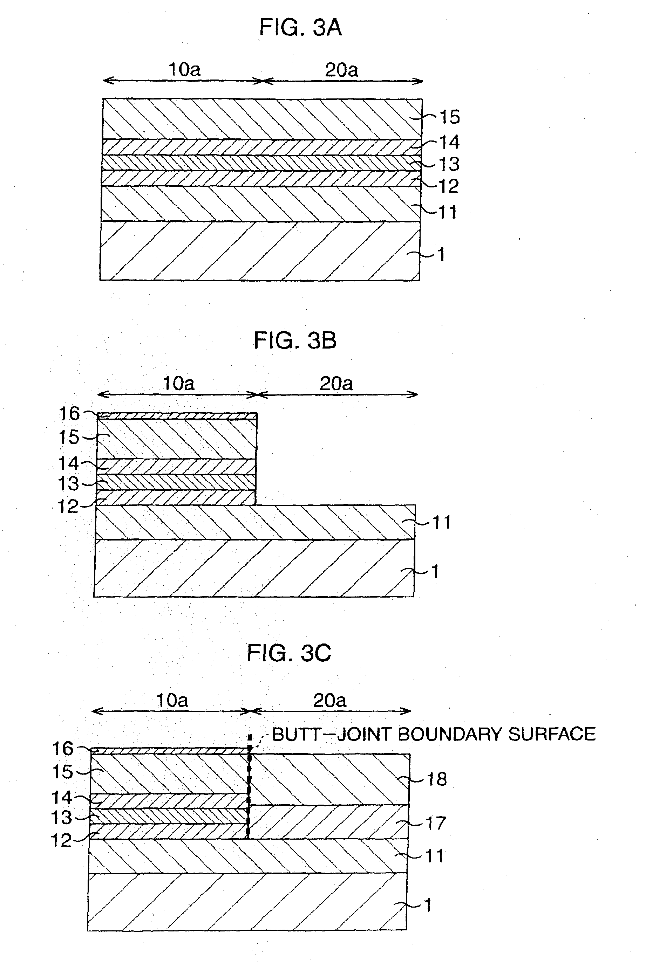

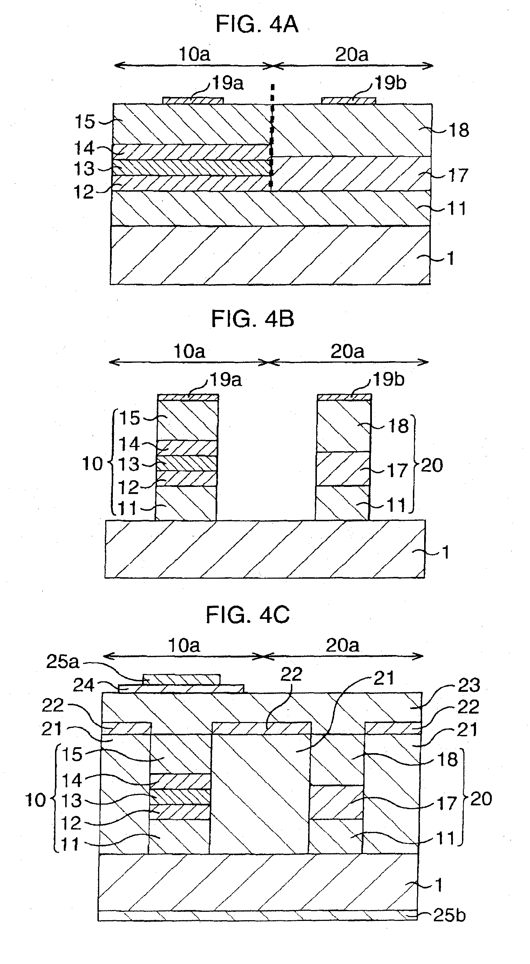

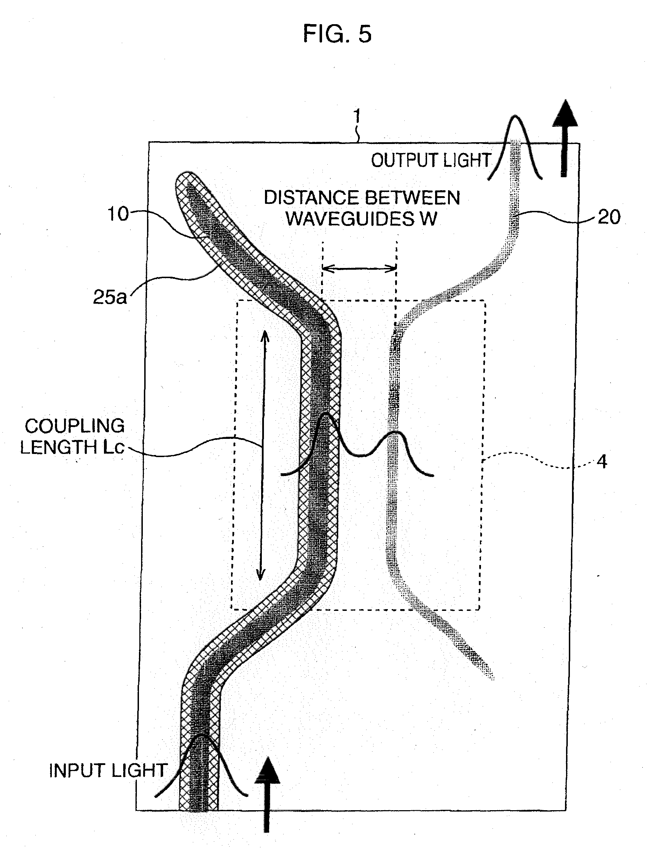

Figs. 3A to 3C and Figs. 4A to 4C are schematic sectional views showing a method of manufacturing the semiconductor integrated optical element containing the principal configuration shown in Fig. 2, and Fig. 4C shows a final form of the semiconductor integrated optical element according to the first embodiment. Fig. 5 is a schematic plan view of the semiconductor integrated optical element corresponded to Fig. 4C, wherein Fig. 4C corresponds to a section of Fig. 5. In the individual drawings, the left-hand side expresses a region (SOA forming region) 10a allowing therein formation of the SOA optical waveguide 10, and the right-hand side expresses a region (optical waveguide forming region) 20a allowing therein formation of the optical waveguide 20.

First, as shown in Fig. 3A, a lower cladding layer 11, a lower separate confinement heterostructure (SCH) layer 12, an active layer 13, an upper SCH layer 14, and an upper cladding layer 15, which are constituents of the active layer structure (also used as the waveguide structure) of SOA, are formed in this order on the semiconductor substrate 1.

More details, on the semiconductor substrate 1 which is an InP (n-InP) substrate adjusted in the conductivity type thereof for example to n-type, an n-InP layer (approximately 500 nm thick), an InGaAsP (i-InGaAsP) layer showing an intrinsic semiconductivity with a small impurity concentration (approximately 100 nm thick, with a compositionally-governed wavelength of 1.2 $\mu$m or around), an i-InGaAs layer (approximately 50 nm thick, with a compositionally-governed wavelength of 1.55 $\mu$m or around), an i-InGaAsP layer (approximately 100 nm thick, with a compositionally-governed wavelength of 1.2 $\mu$m or around), and an InP (p-InP) layer adjusted in the conductivity type thereof to p-type (approximately 200 nm thick) are stacked in this order, typically by metal-organic vapor phase epitaxy (MOVPE). By this process, the lower cladding layer 11, the lower SCH layer 12, the active layer 13, the upper SCH layer 14, and the upper cladding layer 15 are stacked in this order on the semiconductor substrate 1.

Next, as shown in Fig. 3B, a portion of thus-configured active layer structure of SOA, which falls in the optical waveguide forming region 20a, is removed while leaving only the lower cladding layer 11 unremoved.

More details, first, a mask material, which is a silicon oxide film herein, was formed so as to cover the entire surface of the upper cladding layer 15, and the silicon oxide film is patterned by lithography and dry etching, to thereby form a mask layer 16 covering the SOA forming region 10a, and allowing the optical waveguide forming region 20a to expose therein.

Next, using the mask layer 16, the upper cladding layer 15, the upper SCH layer 14, the active layer 13, and the lower SCH layer 12 are etched. By this process, portions of the lower SCH layer 12, the active layer 13, the upper SCH layer 14, and the upper cladding layer 15 in the optical waveguide forming region 20a are removed.

Next, as shown in Fig. 3C, a waveguide layer 17 and an upper cladding layer 18 are formed only in the optical waveguide forming region 20a.

More details, on the lower cladding layer 11 exposed in the optical waveguide forming region 20a, the optical waveguide structure is re-grown (butt-joint growth). For example, an i-InGaAsP layer (approximately 200 nm thick, with a compositionally-governed wavelength of 1.3 $\mu$m or around), and a p-InP layer (approximately 250 nm thick) are stacked in this order by MOVPE. By this process, the waveguide layer 17 and the upper cladding layer 18 are stacked on the lower cladding layer 11 exposed in the optical waveguide forming region 20a. In this process, the waveguide layer 17 and the upper cladding layer 18 are formed in the optical waveguide forming region 20a, so as to bring them into contact, on the side faces thereof, with the lower SCH layer 12, the active layer 13, the upper SCH layer 14, and the upper cladding layer 15 in the SOA forming region 10a, forming a butt-joint boundary surface in between.

Thereafter, the mask layer 16 is removed by a predetermined wet etching process.

Next, as shown in Fig. 4A, a first mask layer 19a for forming the SOA optical waveguide 10 as the first optical waveguide, and a second mask layer 19b for forming the optical waveguide 20 as the second optical waveguide 3 are formed.

More details, first, a mask material, which is a silicon oxide film herein, is deposited so as to cover the entire surface of the upper cladding layers 15, 18, the silicon oxide film is then patterned by lithography and dry etching, to thereby form, in the SOA forming region 10a, a first mask layer 19a having a planar geometry same as that of the first optical waveguide 2 shown in Fig. 2, and in the optical waveguide forming region 20a, a second mask layer 19b having a planar geometry same as that of the second optical waveguide 3 shown in Fig. 2. The planar geometry of the first and second mask layer 19a, 19b herein is such as containing the planar geometry of the directional coupler shown in Fig. 2. The first and second mask layers 19a, 19b in this case are preferably formed while placing the boundary surface of the butt-joint almost at the mid-portion therebetween.

Next, as shown in Fig. 4B, the SOA optical waveguide 10 as the first optical waveguide, and the optical waveguide 20 as the second optical waveguide 3 are formed.

More details, using the first and second mask layers 19a, 19b, the upper cladding layer 15, the upper SCH layer 14, the active layer 13, the lower SCH layer 12, and the lower cladding layer 11 are patterned in the SOA forming region 10a, whereas the upper cladding layer 18, the waveguide layer 17, and the lower cladding layer 11 are patterned into a form of mesa in the optical waveguide forming region 20a, at the same time typically by dry etching such as ICP-RIE. By this process, SOA optical waveguide 10 as the first optical waveguide, composed of the lower cladding layer 11, the lower SCH layer 12, the active layer 13, the upper SCH layer 14, and the upper cladding layer 15, is formed in the SOA forming region 10a, whereas the optical waveguide 20 as the second optical waveguide 3, composed of the lower cladding layer 11, the waveguide layer 17, and the upper cladding layer 18, is formed in the optical waveguide forming region 20a.

The width of the SOA optical waveguide 10 is set to approximately 1.3 $\mu$m, the width of the optical waveguide 20 is set to approximately 2.5 $\mu$m, the coupling length (Lc) of the directional coupler region 4 is set to approximately 330 $\mu$m, and the distance (W) between both optical waveguides is set to approximately 1.0 $\mu$m. In this configuration, a portion composed of the lower SCH layer 12, the active layer 13, and the upper SCH layer 14 in the SOA optical waveguide 10, and a portion of the waveguide layer 17 in the optical waveguide 20, respectively serve as the optical core layers. As described in the above, the SOA optical waveguide 10 and the optical waveguide 20 are formed as the optical waveguides differed from each other in the semiconductor materials composing their optical core layers, differed from each other also in the level of height of the center portions of the individual optical core layers above the semiconductor substrate, and differed from each other still also in the equivalent refractive index.

Because the boundary surface of the butt-joint falls almost on the mid-portion of the first and second mask layers 19a, 19b, the boundary surface of the butt-joint may completely be removed in the dry etching, as the SOA optical waveguide 10 and the optical waveguide 20 are formed.

Moreover, in the dry etching, the terminal portion (on the basis of direction of propagation of optical signal) of the first optical waveguide 2, or SOA optical waveguide 10, and the start portion (on the basis of direction of propagation of optical signal) of the second optical waveguide 3, or the optical waveguide 20, are respectively formed as being tapered in width (thinned towards the tip), and as having an asymmetrical form in the longitudinal direction of the optical waveguides when viewed along the direction of propagation of optical signal, just like a shape of sword blade, as shown in Fig. 2. By forming the SOA optical waveguide 10 and the optical waveguide 20 in this shape, an effect of lowering the reflectivity in the directional coupler region 4 may further be improved, because reflected light may be absorbed by regions other than the optical waveguides, even if optical signal should cause reflection.

Next, as shown in Fig. 4C and Fig. 5, blocking layers 21, 22, a cladding layer 23, a contact layer 24, and a pair of electrodes 25a, 25b are formed in this order.

More details, first, a p-InP layer and an n-InP layer are sequentially grown typically by MOVPE, while keeping the first and second mask layers 19a, 19b unremoved, so as to fill both sides of the SOA optical waveguide 10 and the optical waveguide 20, to thereby form the blocking layers 21, 22 which provide a current confining structure. Next, the first and second mask layers 19a, 19b are removed typically by a predetermined wet etching process. Thereafter, a p-InP layer (approximately 3 $\mu$m thick) and an InGaAsP layer (approximately 100 nm thick, with a compositionally-governed wavelength of 1.3 $\mu$m or around) are grown in this order. In this process, the cladding layer 23 is formed by the p-InP layer.

Next, a p-InGaAsP layer is formed on the cladding layer 23, and the p-InGaAsP layer is then patterned as being left on the cladding layer 23, only in a portion which falls above the SOA optical waveguide 10, that is, patterned as being conforming to the planar geometry of the SOA optical waveguide 10 above the SOA optical waveguide 10, to thereby form the contact layer 24.

Thereafter, the electrode 25a is formed on the contact layer 24, and the electrode 25b is formed over the entire back surface of the semiconductor substrate 1. The electrode 25a is formed over the SOA optical waveguide 10 into a shape, particularly as shown in Fig. 5, conforming to the planar geometry of the SOA optical waveguide 10, similarly to the contact layer 24. The pair of electrodes 25a, 25b herein are similar to those generally used for semiconductor laser element. The SOA optical waveguide 10 is applied with a bias voltage (injected with current) while defining the electrode 25a as an anode and the electrode 25b as a cathode.

The semiconductor integrated optical element of this embodiment is thus completed by these procedures.

Although this embodiment has exemplified a case where the blocking layers 21, 22, which provide a current confining structure, were composed of the p-InP layer and the n-InP layer, the current confining structure may be manufactured also by using a high-resistivity InP layer, in place of the p-InP layer and the n-InP layer, by similar procedures for manufacturing, allowing embodiment in a similar manner. Procedures in the individual steps of manufacturing and order thereof are not limited to as described in the above, allowing embodiment also for the case where any other steps and procedures are adopted. There is no special limitation on the semiconductor substrate to be adopted, configurations of the individual layers (thickness, composition, material) and so forth, allowing embodiment in any elements of any combinations, by appropriately setting the coupling length Lc and the distance W between the waveguides.

As has been described in the above, this embodiment realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

-Modified Examples-

Various modified examples of the first embodiment will be explained below.

(Modified Example 1)

Modified Example 1 will disclose a semiconductor integrated optical element having, similarly to the first embodiment, the SOA optical waveguide and the optical waveguide provided therein, but different in the thickness, width and so forth of predetermined components.

In this Example, first, similarly to as in the first embodiment, the individual steps shown in Figs. 3A and 3B are carried out. Thereafter, in the process of re-growing (butt-joint growth) of the optical waveguide structure on the lower cladding layer 11 exposed in the optical waveguide forming region 20a in the step shown in Fig. 3C, an i-InGaAsP layer (approximately 400 nm thick, with a compositionally-governed wavelength of 1.3 $\mu$m or around), and a p-InP layer (approximately 50 nm or around) are stacked in this order, typically by MOVPE. By this process, the waveguide layer 17 and the upper cladding layer 18, differed in the thickness from those in the first embodiment, are formed on the lower cladding layer 11 exposed in the optical waveguide forming region 20a.

Next, in the steps shown in Figs. 4A and 4B, dry etching such as ICP-RIE is carried out through the first and second mask layers 19a, 19b, to thereby form the SOA optical waveguide 10 having a geometry similar to as shown in Fig. 2, and a width of 2.5 $\mu$m or around, and the optical waveguide 20 having a width of 0.5 $\mu$m or around, are formed at the same time. In the configuration shown in Fig. 2, the coupling length (Lc) of the directional coupler region 4 is set to 70 $\mu$m or around, and the distance (W) between both optical waveguides is set to 0.5 $\mu$m or around.

Also in this Example, similarly to as in the first embodiment, the boundary surface of the butt-joint may completely be removed, as the SOA optical waveguide 10 and the optical waveguide 20 are formed, because the boundary surface of the butt-joint falls almost on the mid-portion of the first and second mask layers 19a, 19b,

Similarly to as in the first embodiment, the SOA optical waveguide 10 and the optical waveguide 20 are formed as the optical waveguides differed from each other in the semiconductor materials composing their optical core layers, differed from each other also in the level of height of the center portions of the individual optical core layers above the semiconductor substrate, and differed from each other still also in the equivalent refractive index.

Similarly to as in the first embodiment, the terminal portion of the first optical waveguide 2, or SOA optical waveguide 10, and the start portion of the second optical waveguide 3, or the optical waveguide 20, are respectively formed as being tapered in width (thinned towards the tip), and as having an asymmetrical form in the longitudinal direction of the optical waveguides when viewed along the direction of propagation of optical signal, just like a shape of sword blade.

Thereafter, similarly to as shown in Fig. 4C, the blocking layers 21, 22, the cladding layer 23, the contact layer 24, and the pair of electrodes 25a, 25b are formed in this order, to thereby complete the semiconductor integrated optical element of this Example.

As has been described in the above, Modified Example 1 realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

(Modified Example 2)

Modified Example 2 will disclose a semiconductor integrated optical element having, similarly to the first embodiment, the SOA optical waveguide and the optical waveguide provided therein, but different in that being provided with a light absorbing region at the terminal portion of the SOA optical waveguide.

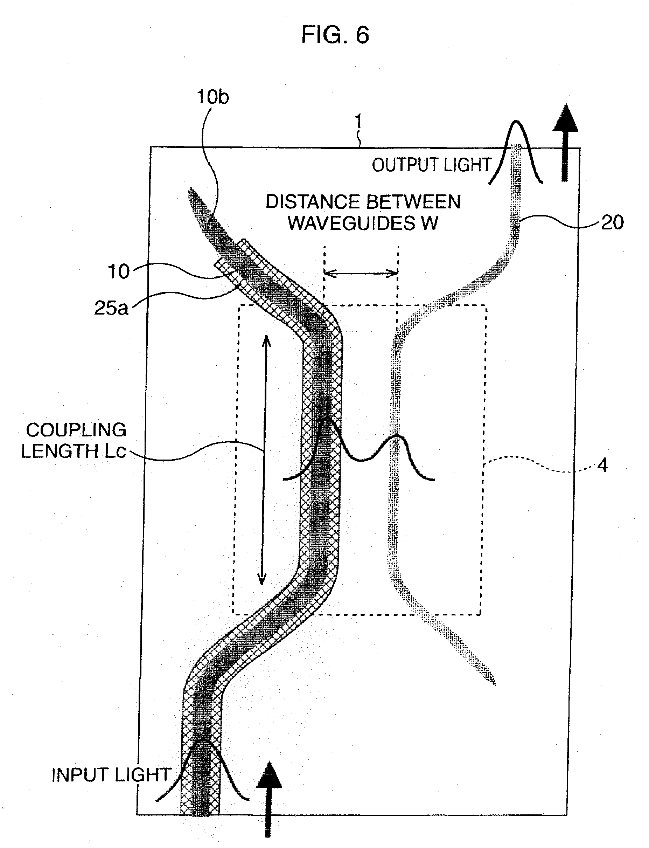

Fig. 6 is a schematic plan view of a final form of a semiconductor integrated optical element in Modified Example 2 of a first embodiment.

In this Example, similarly to as in the first embodiment, the individual steps shown in Figs. 3A to 3C, and Figs. 4A and 4B are carried out. In the step shown in Fig. 4B, the terminal portion (end portion on the side opposite to the input side) of the SOA optical waveguide 10 is preferably formed into a geometry of sword blade, but may be formed into the same geometry with the residual portion of the SOA optical waveguide 10. Thereafter, in the step shown in Fig. 4C, similarly to as in the first embodiment, the blocking layers 21, 22 are formed, the first and second mask layers 19a, 19b are removed, and the cladding layer 23 is formed.

Next, a p-InGaAsP layer is grown on the cladding layer 23. The p-InGaAsP layer is then patterned so as to leave it on the cladding layer 23 only in the portion above the SOA optical waveguide 10 (but excluding the terminal portion of the SOA optical waveguide 10), to thereby form the contact layer 24. In other words, the contact layer 24 in this case is formed above the SOA optical waveguide 10 conforming to the plane geometry of the SOA optical waveguide 10, but is not formed over the terminal portion of the SOA optical waveguide 10.

Thereafter, the electrode 25a is formed on the contact layer 24, and electrode 25b is formed over the entire back surface of the semiconductor substrate 1. The electrode 25a is formed, as shown in Fig. 6, above the SOA optical waveguide 10 conforming to the planar geometry, but excluding the terminal portion, of the SOA optical waveguide 10, similarly to the contact layer 24. The terminal portion of the SOA optical waveguide 10 having no electrode 25a formed thereabove serves as a light absorbing region region 10b.

The pair of electrodes 25a, 25b herein are similar to those generally used for semiconductor laser element. The SOA optical waveguide 10 is applied with a bias voltage (injected with current) while defining the electrode 25a as an anode and the electrode 25b as a cathode.

The semiconductor integrated optical element of this embodiment is thus completed by these procedures.

In the semiconductor integrated optical element of this Example, all light components propagated through the SOA optical waveguide 10, but failed in being coupled by the optical waveguide 20 in the directional coupler region 4, may be absorbed by the light absorbing region 10b which is an active layer portion of the SOA optical waveguide 10 having no current injected thereto. By virtue of this configuration, unnecessary reflective feedback light and stray light may be suppressed.

As has been described in the above, Modified Example 2 realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

(Second Embodiment)

The semiconductor integrated optical element of this embodiment adopts a optical waveguide structure, same as the SOA optical waveguide 10 explained in the first embodiment, as an amplified spontaneous emission (AES) light source, rather than as the SOA optical waveguide. In this case, similarly to the case of SOA optical waveguide 10, a bias voltage is applied (current is injected) while defining the electrode 25a as an anode and the electrode 25b as a cathode.

Also in this embodiment, it is preferable to provide the light absorbing region at the terminal portion of the ASE light source, similarly to as in Modified Example 2 of the first embodiment.

This embodiment realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

(Third Embodiment)

The semiconductor integrated optical element of this embodiment adopts a optical waveguide structure, same as the SOA optical waveguide 10 explained in the first embodiment, as a photodetector detecting optical signal, rather than as the SOA optical waveguide. In this case, contrary to the case of SOA optical waveguide 10, a bias voltage is applied while defining the electrode 25a as a cathode and the electrode 25b as an anode.

Also in this embodiment, it is preferable to provide the light absorbing region at the terminal portion of the ASE light source, similarly to as in Modified Example 2.

This embodiment realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

(Fourth Embodiment)

The semiconductor integrated optical element of this embodiment adopts a optical waveguide structure, same as the SOA optical waveguide 10 explained in the first embodiment, as an optical modulator modulating amplitude, phase, frequency, directionality and so forth of optical signal. As a material for composing the active layer 13 of the optical core in this optical modulator, an i-InGaAsP layer (approximately 50 nm thick, with a compositionally-governed wavelength of 1.4 $\mu$m or around) is used, in place of an i-InGaAs layer (approximately 50 nm, with a compositionally-governed wavelength of 1.55 $\mu$m or around) which was used as a material for composing the active layer 13 of the SOA optical waveguide 10 in the first embodiment.

In this case, contrary to the case of SOA optical waveguide 10, a bias voltage is applied while defining the electrode 25a as a cathode and the electrode 25b as an anode.

This embodiment realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

(Fifth Embodiment)

The semiconductor integrated optical element of this embodiment adopts a optical waveguide structure, same as the SOA optical waveguide 10 explained in the first embodiment, as an optical oscillator such as DFB laser, generating optical signal by current injection or light excitation.

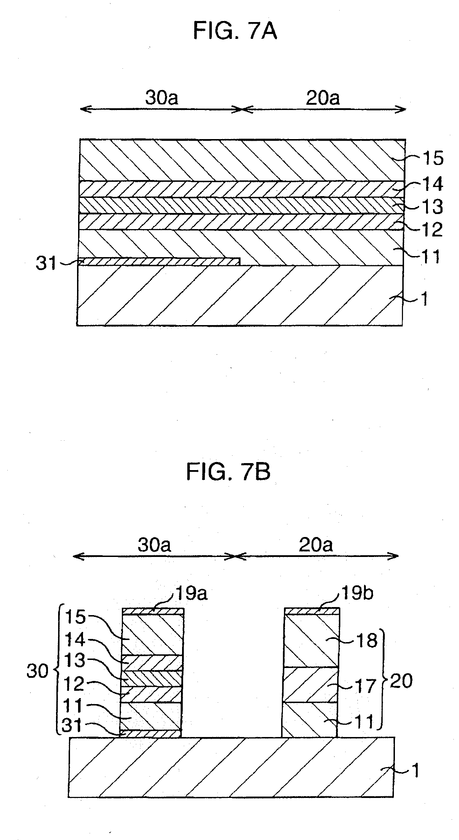

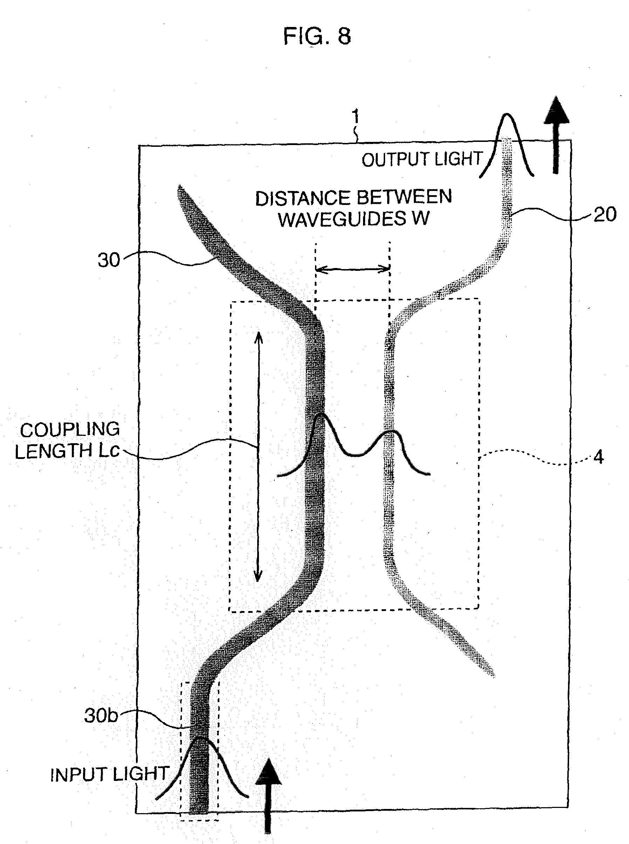

Figs. 7A and 7B are schematic sectional views showing principal steps out of the individual steps of manufacturing a semiconductor integrated optical element according to a fifth embodiment, and respectively correspond to Fig. 3A and Fig. 4B in the first embodiment. Fig. 8 is a schematic plan view corresponded to Fig. 7B, wherein Fig. 7B corresponds to a section of Fig. 8. In the individual drawings, the portion on the left-hand side expresses the region (optical oscillator waveguide forming region) 30a allowing therein formation of the optical oscillator waveguide 30, and the right-hand side expresses the region (optical waveguide forming region) 20a allowing therein formation of the optical waveguide 20.

The semiconductor integrated optical element of the fifth embodiment may be formed by, first as shown in Fig. 7A, forming a grating layer 31, and constituents of the active layer structure (also serves as a waveguide structure) including the lower cladding layer 11 of SOA, the lower separate confinement heterostructure (SCH) layer 12, the active layer 13, the upper SCH layer 14, and the upper cladding layer 15, sequentially on the semiconductor substrate 1.

More details, a grating mask is locally formed on the semiconductor substrate 1 typically provided as an InP (n-InP) substrate adjusted in the conductivity type thereof to n-type, only at a preceding stage 30b using an EB exposure apparatus, to thereby form the grating layer 31.

Next, on the semiconductor substrate having the grating layer 31 formed thereon, the n-InGaAsPgrating layer (approximately 50 nm thick, with a compositionally-governed wavelength of 1.1 $\mu$m or around), n-InP layer (approximately 500 nm thick), an InGaAsP (i-InGaAsP) layer (approximately 100 nm thick, with a compositionally-governed wavelength of 1.2 $\mu$m or around) having a small impurity content and therefore showing features of intrinsic semiconductor, an i-InGaAs layer (approximately 50 nm thick, with a compositionally-governed wavelength of 1.55 $\mu$m or around), an i-InGaAsP layer (approximately 100 nm thick, with a compositionally-governed wavelength of 1.2 $\mu$m or around), and an InP (p-InP) layer (approximately 200 nm thick) adjusted in the conductivity type to p-type, are stacked in this order typically by metal organic vapor phase epitaxy (MOVPE). By this process, the lower cladding layer 11, the lower SCH layer 12, the active layer 13, the upper SCH layer 14, and the upper cladding layer 15 are stacked on the semiconductor substrate 1 so as to bury the grating layer 31.

Next, the individual process steps corresponded to Fig. 3B, Fig. 3C and Fig. 4A in the first embodiment are carried out, and then as shown in Fig. 7B, the optical oscillator waveguide 30 as the first optical waveguide and the optical waveguide 20 as the second optical waveguide 3 are formed.

More details, by using the first and second mask layers 19a, 19b, the upper cladding layer 15, the upper SCH layer 14, the active layer 13, the lower SCH layer 12, and the lower cladding layer 11, and the grating layer 31 are patterned in the optical oscillator waveguide forming region 30a, whereas the upper cladding layer 18, the waveguide layer 17, and the lower cladding layer 11 are patterned into a form of mesa in the optical waveguide forming region 20a, at the same time typically by dry etching such as ICP-RIE. By this process, the optical oscillator waveguide 30 as the first optical waveguide, composed of the grating layer 31, the lower cladding layer 11, the lower SCH layer 12, the active layer 13, the upper SCH layer 14, and the upper cladding layer 15, is formed in the optical oscillator waveguide forming region 30a, whereas the optical waveguide 20 as the second optical waveguide 3, composed of the lower cladding layer 11, the waveguide layer 17, and the upper cladding layer 18, is formed in the optical waveguide forming region 20a.

Because the boundary surface of the butt-joint falls almost on the mid-portion of the first and second mask layers 19a, 19b, the boundary surface of the butt-joint may completely be removed in the dry etching, as the optical oscillator waveguide 30 and the optical waveguide 20 are formed.

Moreover, in the dry etching, the terminal portion of the first optical waveguide 2, or the optical oscillator waveguide 30, and the start portion of the second optical waveguide 3, or the optical waveguide 20, are respectively formed as being tapered in width (thinned towards the tip), and as having an asymmetrical form in the longitudinal direction of the optical waveguides when viewed along the direction of propagation of optical signal, just like a shape of sword blade, as shown in Fig. 8. By forming the optical oscillator waveguide 30 and the optical waveguide 20 in this shape, an effect of lowering the reflectivity in the directional coupler region 32 may further be improved, because reflected light may be absorbed by regions other than the optical waveguides, even if optical signal should cause reflection.

Thereafter, similarly to as shown in Fig. 4C, the blocking layers 21, 22, the cladding layer 23, the contact layer 24, and the pair of electrodes 25a, 25b are formed in this order, to thereby complete the semiconductor integrated optical element of this Example.

In this optical oscillator waveguide 30, similarly to as in the SOA optical waveguide 10 in the first embodiment, a bias voltage is applied (current is injected) while defining the electrode 25a as an anode and the electrode 25b as a cathode.

As has been described in the above, this embodiment realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

Also in this embodiment, it is preferable to provide the light absorbing region at the terminal portion of the DFB laser light source, similarly to as in Modified Example 2 of the first embodiment.

This embodiment realizes a highly reliable semiconductor integrated optical element, capable of suppressing, as possible, generation of reflection loss and emission loss in optical coupling, and of obtaining extremely desirable optical coupling characteristics, without causing reflection of optical signal, between different types of optical waveguides differed from each other in the equivalent refractive index.

Also, the semiconductor integrated optical element according to this embodiment can be utilized for an optical module using an optical signal. Furthermore, the semiconductor integrated optical element according to this embodiment can be utilized for an optical communication system. Furthermore, the semiconductor integrated optical element according to this embodiment can be utilized for optical components. In addition, the optical module employing the semiconductor integrated optical element in this embodiment can be utilized for an optical transmission system.

**Claims**

1. A semiconductor integrated optical element comprising:

   a single semiconductor substrate; and
   a first optical waveguide and a second optical waveguide formed on said semiconductor substrate, differed in the equivalent refractive index from each other;
   being configured so as to allow light signal to propagate from said first optical waveguide to said second optical waveguide,

   wherein said first optical waveguide and said second optical waveguide are provided side-by-side on said semiconductor substrate so as to form a directional coupler allowing optical coupling between said first optical waveguide and said second optical waveguide, and
   a first-guiding-mode optical signal in said first optical waveguide is output after being converted into a second-guiding-mode optical signal in second optical waveguide.

2. The semiconductor integrated optical element according to claim 1, wherein each of said first optical waveguide and said second optical waveguide has an optical core layer composed of semiconductor materials different from each other.

3. The semiconductor integrated optical element according to claim 2, wherein said first optical waveguide and said second optical waveguide are differed in the height of the center portion of each of said optical core layer above the said semiconductor substrate.

4. The semiconductor integrated optical element according to claim 1, wherein said first optical waveguide has a light absorbing region at the terminal portion thereof.

5. The semiconductor integrated optical element according to claim 1, wherein one of, or both of said first optical waveguide and said second optical waveguide are functional optical waveguides having a function of modifying intensity and phase of the light signal.

6. The semiconductor integrated optical element according to claim 1, wherein one of, or both of said first optical waveguide and said second optical waveguide are optical signal generators generating optical signals, or ASE light sources.

7. The semiconductor integrated optical element according to claim 1, wherein one of, or both of said first optical waveguide and said second optical waveguide are optical modulators modulating optical signals.

8. The semiconductor integrated optical element according to claim 1, wherein one of, or both of said first optical waveguide and said second optical waveguide are photodetectors detecting optical signals.

9. The semiconductor integrated optical element according to claim 1, a butt-joint on the boundary surface between said first and second optical waveguide is removed.

10. An optical transmission system or an optical module employed in the optical transmission system, comprising the semiconductor integrated optical element according to any of claims 1 to 9.

11. A method for manufacturing a semiconductor integrated optical element, comprising the steps of:

depositing a first optical waveguide material over a semiconductor substrate;
patterning said first optical waveguide material to remain only in a first forming region;
depositing a second optical waveguide material differed from said first optical waveguide material in the equivalent refractive index in a second forming region over said semiconductor substrate, to be into contact with the side face of said first optical waveguide material; and
patterning said first optical waveguide material and said second optical waveguide material to form a first optical waveguide in the first forming region and a second optical waveguide in the second forming region, respectively, and removing a butt-joint on the boundary surface between said first and second optical waveguide material.

## FIG. 1

# FIG. 2

REMOVED BUTT−JOINT
BOUNDARY SURFACE

OUTPUT LIGHT

DISTANCE BETWEEN
WAVEGUIDES W

COUPLING
LENGTH Lc

INPUT LIGHT

13

## FIG. 3A

## FIG. 3B

## FIG. 3C

FIG. 4A

FIG. 4B

FIG. 4C

## FIG. 5

OUTPUT LIGHT

DISTANCE BETWEEN
WAVEGUIDES W

10

25a

20

COUPLING
LENGTH Lc

4

INPUT LIGHT

# FIG. 6

10b

1

OUTPUT LIGHT

DISTANCE BETWEEN
WAVEGUIDES W

20

10

25a

COUPLING
LENGTH Lc

4

INPUT LIGHT

# FIG. 7A

30a | 20a

15
14
13
12
11
31
1

# FIG. 7B

30a | 20a

19a | 19b

15
14
13
12
11
31
30
18
17
20
11
1

# FIG. 8

**European Patent Office**

**EUROPEAN SEARCH REPORT**

Application Number

EP 08 15 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 585 468 B1 (FURUKAWA ELECTRIC CO LTD [JP]) 15 December 1999 (1999-12-15) | 1,5 | INV.<br>G02B6/12 |
| A | * paragraphs [0013], [0020] - [0027]; figures 1,2 * | 11 | G02B6/13<br>G02B6/125 |
| X | EP 0 632 300 B1 (CANON KK [JP]) 14 February 2001 (2001-02-14) | 1,3,4,8, 10 | |
| A | * the whole document * | 11 | |
| X | US 6 215 918 B1 (KEIL NORBERT [DE] ET AL) 10 April 2001 (2001-04-10) | 1,7 | |
| A | * column 7 - column 10; claims 12,13; figure 2 * | 11 | |
| X | GB 2 370 372 A (BOOKHAM TECHNOLOGY PLC [GB]) 26 June 2002 (2002-06-26) | 1,6 | |
| A | * page 8 - page 10; figures 4,6 * | 11 | |

TECHNICAL FIELDS SEARCHED (IPC)

G02B

The present search report has been drawn up for all claims

| Place of search | Date of completion of the search | Examiner |
|---|---|---|
| Berlin | 17 June 2008 | Andreassen, Jon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 959 278 A1

## ANNEX TO THE EUROPEAN SEARCH REPORT
## ON EUROPEAN PATENT APPLICATION NO.

EP 08 15 1507

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2008

| Patent document cited in search report | | Publication date | Patent family member(s) | | Publication date |
|---|---|---|---|---|---|
| EP 0585468 | B1 | 15-12-1999 | DE | 69327278 D1 | 20-01-2000 |
| | | | DE | 69327278 T2 | 13-04-2000 |
| | | | EP | 0585468 A1 | 09-03-1994 |
| | | | JP | 5264834 A | 15-10-1993 |
| | | | WO | 9319389 A1 | 30-09-1993 |
| | | | US | 5440656 A | 08-08-1995 |
| EP 0632300 | B1 | 14-02-2001 | DE | 69426681 D1 | 22-03-2001 |
| | | | DE | 69426681 T2 | 30-08-2001 |
| | | | EP | 0632300 A1 | 04-01-1995 |
| | | | JP | 7020329 A | 24-01-1995 |
| | | | US | 5517589 A | 14-05-1996 |
| US 6215918 | B1 | 10-04-2001 | AT | 223072 T | 15-09-2002 |
| | | | WO | 9722907 A1 | 26-06-1997 |
| | | | DE | 19549245 A1 | 03-07-1997 |
| | | | EP | 1008013 A1 | 14-06-2000 |
| | | | JP | 2000501855 T | 15-02-2000 |
| GB 2370372 | A | 26-06-2002 | WO | 02052315 A1 | 04-07-2002 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007035318 A